# EUROPÄISCHE PATENTSCHRIFT

(11) **EP 3 372 286 B1**
(45) Veröffentlichungstag und Bekanntmachung des Hinweises auf die Patenterteilung: **18.12.2019**
(21) Anmeldenummer: 18160153.5
(22) Anmeldetag: 06.03.2018
(51) Int. Cl.: A63B 57/60, B60S 3/04

(54) **REINIGUNGSSTATION INSBESONDERE FÜR EINEN GOLFTROLLEY**
CLEANING STATION ESPECIALLY FOR A GOLF TROLLEY
STATION DE NETTOYAGE NOTAMMENT POUR UN CHARIOT DE GOLF

(30) Priorität: 08.03.2017 DE 102017104815
(43) Veröffentlichungstag der Anmeldung: 12.09.2018
(73) Patentinhaber: Schülein, Robert, 91555 Feuchtwangen (DE)
(72) Erfinder: Schülein, Robert, 91555 Feuchtwangen (DE)
(74) Vertreter: Mielke, Klaus

(56) Entgegenhaltungen:
- DE-A1- 3 923 213
- DE-A1- 10 126 123
- US-A- 4 233 703
- US-A1- 2005 015 902

## Beschreibung

Die Erfindung betrifft eine Reinigungsstation zumindest für ein Rad einer Transportkarre, insbesondere eines Golftrolleys.

Eine Reinigungsstation gemäß der Erfindung ist zur Reinigung von nahe allen Arten sog. Transportkarren geeignet, insbesondere zur Reinigung der Räder von Golftrolleys. Bei Golftrolleys handelt es sich um in der Regel 1- oder 2-achsige Zug- und/oder Schubwagen mit 1 bis 4 Rädern mit und ohne Batterie-Fahrantrieb für den Transport von Golfbags. In diesen Taschen kann Golfzubehör, d.h. sowohl die Sportgeräte für das Golfspiel, insbesondere Golfschläger und Golfbälle, aber auch persönliche Ausrüstungsgegenstände, insbesondere Schuhe und Bekleidungsstücke untergebracht werden. Besonders verbreitet sind 3-rädrige Ausführungen von Golftrolleys mit einer zweirädrigen Hinterachse und einem z.B. drehbaren Vorderrad an der Vorderachse. Mit der erfindungsgemäßen Reinigungsstation können somit alle handelsüblichen ein- bzw. zweiachsigen sowie zwei-, drei- und vierrädrigen Trolleys mit verschiedenen Raddurchmessern, Radbreiten und Spurweiten gereinigt werden.

Aus der WO 2005/092681 A1 ist ein Reinigungsapparat insbesondere für die Räder eines Golftrolleys bekannt. Dieser weist eine Stützfläche auf, über die ein Golftrolley in einem Zug von einer Eingangs- zu einer Ausgangsseite gefahren werden kann. Beidseitig der Stützfläche ist jeweils ein überdachter Kanal mit Wasserdüsen angeordnet. Wird ein Golftrolley über die Stützfläche gezogen, so greifen nur die beidseitigen Räder an einer Trolleyachse in die Kanäle ein und werden von den Wasserdüsen gereinigt, sofern die Spurweite des Trolleys, die Breite der Stützfläche und der Abstand der gegenüber liegenden Kanäle aufeinander abgestimmt sind. Dieser Reinigungsapparat weist mehrere Nachteile auf. So kann das mittlere Rad eines dreirädrigen Golftrolleys während einer Durchfahrt nicht mitgereinigt werden. Vielmehr muss dieses separat nachgereinigt werden. Zudem können nur Räder von Golftrolleys gereinigt werden, deren Spurweite etwa der Breite der Stützfläche entspricht.

Aus der DE 101 04 959 A1 ist eine Vorrichtung zum Reinigen von Golfzubehör bekannt. Diese weist eine Reihe modulartig nebeneinander angeordneter Reinigungseinheiten für Golfzubehör auf, die jeweils frontseitig bedienbar sind. Hierzu muss ein Benutzer seitlich an eine ausgewählte Einheit herantreten und sich dieser zuwenden. Eine Einheit ist eine Räderreinigung für einen sog. Caddywagen. Diese weist zwei Paare gegenüberliegender Bürsten auf, die über eine Wasserzuführung leicht befeuchtet werden. Ein Caddy kann zur Reinigung mit den Rädern auf die Bürstenpaare geschoben werden. Diese Einheit weist den Nachteil auf, dass nur eine oberflächliche Reinigung der Radaufstandsflächen möglich ist. So können grobe bzw. angetrocknete Verschmutzung nicht oder nur mit erheblichem Zeitaufwand entfernt werden. Zudem besteht die Gefahr, dass sich Schmutz in den Bürsten verfängt und ein Schutzübertrag auf einen nachfolgend zu reinigenden, anderen Caddy auftritt. Schließlich können die Bürsten angefeuchtete, schmierige Verschmutzungen kaum beseitigen. US 4,233,703 offenbart den der Erfindung am nächsten kommenden Stand der Technik.

Der Erfindung liegt die Aufgabe zu Grunde, eine universelle Reinigungsstation aufzuzeigen, mit der eine wirkungsvolle Reinigung von Golftrolleys mit unterschiedlichen Spurweiten, Räderanzahlen und Raddurchmessern möglich ist. Die Aufgabe wird gelöst mit der im Anspruch 1 angegebenen Reinigungsstation. Vorteilhafte weitere Ausgestaltungen der Erfindung sind in den Unteransprüchen angegeben.

Die erfindungsgemäße Reinigungsstation weist auf eine Plattform für die Transportkarre sowie eine Anordnung mit einer Reinigungswalze und einer Antriebswalze zum Abstützen eines Rads der Transportkarre sowie einer dazwischen angeordneten Bürstenwalze zur Reinigung zumindest der Radaufstandsfläche. Die Walzen sind unter einer Öffnung in der Plattform quer zur Schubrichtung der Transportkarre parallel angeordnet. Über einen Antrieb sind die Reinigungs- und Antriebswalze gleichlaufend und die Bürstenwalze hierzu gegenlaufend angetrieben.

Zur Durchführung eines Reinigungsvorgangs wird insbesondere ein Golftrolley mit einem Rad oder einer Achse auf die Walzenanordnung in der Öffnung geschoben. Dabei gelangt zumindest ein zu reinigendes Rad mit der Radaufstandsfläche auf die Walzenanordnung. Die Öffnung und die Walzenanordnung weisen hierfür bevorzugt eine Breite auf, welche die Auflage aller Räder an einer Achse ermöglicht. Es ist somit vorteilhaft sowohl die Platzierung einer Achse mit einem zu reinigenden Rad, das annähernd in der Mitte der Walzen aufliegt, als auch die Platzierung einer Achse mit zwei zu reinigenden Rädern, die in den Außenbereichen der Walzen aufliegen, möglich. Ein Rad ist dabei mit der Radaufstandsfläche zwischen Reinigungs- und Antriebswalze gefangen und daran gehindert den Raum zwischen den Walzen zu passieren. Reinigungs- und Antriebswalze sind gleichlaufend angetrieben, sodass durch die Antriebswalze eine Mitrotation eines aufliegenden Rads hervorgerufen wird.

Erfindungsgemäß werden durch die Reinigungswalze grob anhaftende Verschmutzungen, wie z.B. Lehmklumpen, in der Art einer Vorreinigung von Radaufstandsflächen entfernt. Erfindungsgemäß ist zwischen Reinigungs- und Antriebswalze eine zusätzliche Bürstenwalze angeordnet und gegenlaufend zu diesen angetrieben. Deren Bürsten rotieren somit mit einer Relativgeschwindigkeit im unteren Bereich eines Rads an der Radaufstandsfläche entlang. Es können damit in der Art einer Endreinigung insbesondere feine Restverschmutzungen von einer Radaufstandsfläche entfernt werden.

Die Erfindung weist den besonderen Vorteil auf, dass mit der erfindungsgemäßen Auswahl und Anordnung der drei Walzen, d.h. der Reinigungs-, Bürsten- und Antriebswalze, in einem Arbeitsgang eine besonders effektive Reinigungswirkung in kurzer Zeit erzielt werden kann. Die Erfindung weist weiterhin den besonderen Vorteil auf, dass die Reinigung der Räder einer Transportkarre, insbesondere eines Golftrolleys unterschiedlichster Art, d.h. mit ein oder zwei Achsen sowie mit ein, zwei, drei oder vier Rädern und unterschiedlicher Spurweite der jeweiligen Achse möglich ist.

Bei einer weiteren vorteilhaften Ausführung der Erfindung weist die Reinigungswalze eine größere Umfangsgeschwindigkeit als zumindest die Antriebswalze auf. Diese Wirkung kann dadurch erzielt werden, dass entweder die Reinigungswalze mit einer höheren Drehzahl als die Antriebswalze rotiert, oder dass die Reinigungswalze mit derselben Drehzahl wie die Antriebswalze rotiert und einen größeren Durchmesser aufweist. In beiden Fällen liegt ein Rad eines Golftrolleys im Wesentlichen auf der Antriebswalze auf und wird von dieser annähernd mit derselben Umfangsgeschwindigkeit mitgenommen. Da die Reinigungswalze aufgrund der höheren Umfangsgeschwindigkeit vorauseilt, entsteht ein Schlupf zu einer Radaufstandsfläche. Diese wird somit abgeschabt und somit vorteilhaft eine Vorreinigung von groben Verschmutzungen erzielt.

Bei einer weiteren vorteilhaften Ausführung der Erfindung weist die Reinigungswalze auf der Mantelfläche axial verlaufende, insbesondere eckige, Reinigungsleisten auf. Diese stehen über die Mantelfläche der Reinigungswalze hinaus und bilden eine Art klingenartiges, kantiges Schruppprofil. Die Reinigungsleisten erhöhen somit den Abtrag von grob anhaftenden Verschmutzungen und es wird die Wirkung der Vorreinigung vorteilhaft weiter verbessert.

Bei einer weiteren vorteilhaften Ausführung der Erfindung sind im Bereich der Bürstenwalze Reinigungsdüsen angeordnet, welche die Bürstenwalze radial überragen und axial beidseitig auf diese gerichtet sind. Die Reinigungsdüsen sind vorteilhaft im Bereich beider Stirnflächen der Bürstenwalze angeordnet. Deren Öffnungen sind radial oberhalb der Mantelfläche angeordnet und beidseitig annähernd axial zur Mitte der Bürstenwalze gerichtet. Es ist somit vorteilhaft eine zusätzliche seitliche Beaufschlagung eines auf der Anordnung platzierten Rads mit einem Reinigungsmedium möglich. Es können insbesondere anhaftende Verschmutzungen aufgelockert oder von der Bürstenwalze gelöste Verschmutzungen wegbefördert werden. Es wird vorteilhafte eine Beseitigung von Verschmutzungen an den Seitenflächen, Innenflanken und Speichen eines Rads und somit eine wirkungsvolle Reinigung des gesamten Rads ermöglicht.

Vorteilhaft weisen die Reinigungsdüsen separate Düsenöffnungen für Wasser und/oder Luft auf. Es ist damit die Beaufschlagung eines Rads mit Sprühwasser und/oder Druckluft möglich. So können locker anhaftende Verschmutzungen mittels Druckluft abgeblasen werden. Weiterhin können nach einer Reinigung mit Spritzwasser am Rad haftende Wassertropfen mit Druckluft getrocknet werden. Es wird damit eine besonders gründliche Reinigung eines Rads sowohl von Verschmutzungen als auch von Flüssigkeiten möglich.

Bei einer besonders vorteilhaften Ausführung der Erfindung weisen die Reinigungs- und Antriebswalze an den Enden jeweils einen ersten Bereich mit einem ersten Durchmesser und dazwischen einen zweiten Bereich mit einem zweiten, größeren Durchmesser auf. Die Bürstenwalze wiederum weisen an den Enden jeweils einen ersten Bereich mit einem ersten Durchmesser und dazwischen einen zweiten Bereich mit einem zweiten, kleineren Durchmesser auf. Der zweite Bereich der Bürstenwalze greift schließlich unter Bildung eines gleichmäßigen Walzenspalts in die ersten Bereiche von Reinigungs- und Antriebswalze ein. Diese Walzenanordnung weist somit drei axiale Bereiche auf. In den außenliegenden Bereichen haben Reinigungs- und Antriebswalze einen geringeren und die Bürstenwalze einen größeren Durchmesser. Im mittleren Bereich haben Reinigungs- und Antriebswalze einen größeren und die Bürstenwalze einen geringeren Durchmesser. Die Walzen verlaufen somit stufenförmig, wobei Bereiche mit geringerem und Bereiche mit größerem Durchmesser zur Bildung eines gleichmäßigen Walzenspalts einander gegenüber liegen.

Da der Abstand zwischen den Mantelflächen von Reinigungs- und Antriebswalze in den außenliegenden Bereichen größer ist als im mittleren Bereich, tauchen Räder, die einen größeren Durchmesser aufweisen, besonders beidseitig außen an der Hinterachse eines Golftrolleys angeordnete Räder, tiefer in den Zwischenraum zwischen Reinigungs- und Antriebswalze ein. Diese sind somit während der Reinigung sicher in den äußeren Bereichen der Anordnung geführt. Die außenliegenden Bereiche erstrecken sich vorteilhaft über einen breiten axialen Abschnitt von Reinigungs- und Antriebswalze, sodass auch Räder an Achsen mit unterschiedlicher Spurweite sicher führ- und reinigbar sind.

Dagegen ist bei dieser Ausführung der Abstand zwischen den Mantelflächen von Reinigungs- und Antriebswalze im mittleren Bereich geringer. Dort ist ein Rad mit kleinerem Durchmesser auflegbar ohne die Gefahr eines Durchfallens zwischen Reinigungs- und Antriebswalze. Es ist die Reinigung von Rädern mit kleinerem Durchmesser möglich, besonders des mittigen Stütz- oder Lenkrads eines dreirädrigen Golftrolleys. Es sind somit Räder von Transportkarren mit unterschiedlichem Durchmesser reinigbar, insbesondere bei einem Golftrolley mit einem mittigen drehbaren Vorderrad.

Besonders vorteilhaft weist die Bürstenwalze Ringträgerelemente mit Reinigungsdüsen auf, welche zwischen den Bereichen und/oder an den Enden der Bürstenwalze angeordnet sind, wobei die Reinigungsdüsen die Bereiche radial überragen und axial beidseitig auf diese gerichtet sind. Bevorzugt können derartige Ringträgerelemente auf der Bürstenwalze zwischen Bereichen mit größerem und kleinerem Durchmesser angeordnet sein sowie an den Enden der Bürstenwalze. Die Reinigungsdüsen sind zudem vorteilhaft in stationären Positionen angeordnet, sodass vorteilhaft eine gleichmäßige Beaufschlagung der Bürstenwalze der Bereiche mit Spitzwasser bzw. Druckluft möglich ist. Die an den Enden der Bürstenwalze angeordneten Ringträgerelemente weisen vorteilhaft Reinigungsdüsen mit Düsenöffnungen auf, die jeweils axial zur Mitte der außenliegenden Bereiche der Walzen gerichtet sind. Die Ringträgerelemente zwischen den Bereichen weisen Reinigungsdüsen mit zweiseitigen Düsenöffnungen auf, die axial zur Mitte der außenliegenden Bereiche und zur Mitte des mittleren Bereichs der Walzen gerichtet sind. Die Düsenöffnungen sind somit jeweils beidseitig axial zur Mitte der Bereiche gerichtet. Damit werden abgeschattete Bereiche an Rädern vermieden und eine vollständige, gleichmäßige Beaufschlagung mit Spitzwasser bzw. Druckluft erreicht.

Bei einer weiteren vorteilhaften Ausführung der Erfindung weist die Antriebswalze auf der Mantelfläche axial verlaufende, insbesondere runde, Reinigungsleisten auf. Da ein zu reinigendes Rad in diesem Fall nicht unmittelbar auf der Mantelfläche der Antriebswalze aufliegt, wird die Gefahr eines Anwalzens anhaftender grober Verschmutzungen auf die Radaufstandsfläche reduziert. Weiterhin kann aufgrund des Eindrückens der Reinigungsleisten in anhaftende grobe Verschmutzungen eine Auflockerung erreicht werden.

Bei einer weiteren vorteilhaften Ausführung der Erfindung ist die Bürstenwalze in vertikaler Richtung federnd ausweichfähig gelagert. Die Bürstenwalze ist somit abhängig vom Durchmesser eines zur reinigenden Rads, insbesondere eines Rads mit großem Durchmesser im außenliegenden Bereich der Bürstenwalze mit großem Walzendurchmesser, in vertikaler Richtung ausweichfähig. Es wird so vorteilhaft die Anlegbarkeit der Bürstenwalze an ein zu reinigendes Rad verbessert. Weiterhin wird vorteilhaft die Gefahr eines unerwünscht flachen Anliegens der Borsten an der Radaufstandsfläche und somit die Gefahr des Absinkens der Reinigungswirkung einer erfindungsgemäßen Reinigungsstation reduziert. Besonders vorteilhaft ist die Bürstenwalze an einem schwenkbaren Lenkerarm gelagert und über eine Zugfeder ausweichfähig.

Weiterhin weist die Reinigungsstation besonders vorteilhaft einen Sensor zur Erfassung der Ausweichung der Bürstenwalze auf, welcher die Ansteuerung der Reinigungsdüsen veranlasst. Bei Auflage eines Rads mit größerem Durchmesser auf einen außenliegenden Bereich der Walzen erfolgt eine größere Auslenkung der Bürstenwalze als bei Auflage eines Rads mit geringerem Durchmesser auf den mittigen Bereich der Anordnung. Abhängig vom erfassten Ausmaß der Auslenkung durch den Sensor kann eine selektive Ansteuerung der Reinigungsdüsen für die jeweiligen Bereiche erfolgen. Bei Erfassung einer größeren Auslenkung durch den Sensor erfolgt z.B. die Aktivierung der Reinigungsdüsen für die außenliegenden Bereiche der Walzen, bzw. bei der Erfassung einer kleineren Auslenkung die Aktivierung nur der Reinigungsdüsen für den mittleren Bereich der Walzen. Es erfolgt somit keine Aktivierung von Reinigungsdüsen für Bereiche, in denen kein zu reinigendes Rad aufgelegt ist. Dabei wird vorteilhaft eine bedarfsgenaue Aktivierung der Reinigungsdüsen und eine Reduktion des Wasser- bzw. Druckluftverbrauchs einer erfindungsgemäßen Reinigungsstation erzielt. Dies macht es möglich, dass die Reinigungsdüsen mit Wasser aus einer örtlichen Fernwasserleitung versorgbar sind und Einrichtungen zur Erzeugung von Druckwasser nicht benötigt sind.

Bei einer weiteren vorteilhaften Ausführung der Erfindung weist die Reinigungsstation eine Führung für ein mittiges Rad einer Transportkarre in Schubrichtung im Bereich der Mitte der Walzen auf. Ein Rad wird somit radial durch Reinigungs- und Antriebswalze und axial durch die Führung im mittleren Walzenbereich geführt. Es wird somit eine besonders sichere Auflage einer Transportkarre auf der erfindungsgemäßen Reinigungsstation erzielt.

Bei einer weiteren vorteilhaften Ausführung der Erfindung weist die Reinigungsstation eine Abdeckung für die Öffnung auf, die in bzw. entgegen der Schubrichtung verfahrbar ist. Vorteilhaft verschließt eine solche Abdeckung die Öffnung, wenn die Reinigungsstation nicht benötigt wird. Vor Beginn eines Reinigungsvorgangs wird die Abdeckung weggefahren, sodass die Anordnung in der Öffnung für eine Transportkarre zugänglich ist. Nach Abschluss des Reinigungsvorgangs wird die Abdeckung wieder auf die Öffnung gefahren. Es wird so das Eintreten von Fremdkörpern in die Anordnung verhindert und die Gefahr von Beschädigungen an den Walzen reduziert. Außerdem wird das sichere Überqueren der Plattform für eine Person ermöglicht.

Vorteilhaft weist die Reinigungsstation zumindest eine Lichtschranke im Bereich der Walzen zum gesteuerten Öffnen bzw. Schließen der Abdeckung auf. Diese erfasst Räder von Transportkarren im Bereich der Öffnung. Diese kann somit bei Erfassung von Rädern vor der Öffnung automatisch geöffnet und bei Erfassung von Rädern hinter der Abdeckung automatisch geschlossen werden. Ein manueller Eingriff durch eine Person ist nicht notwendig.

Gemäß einer weiteren vorteilhaften Ausführung der Erfindung weist die Reinigungsstation zumindest eine Unterflurdüse in der Öffnung auf, welche auf das Fahrgestell gerichtet ist. Über die Unterflurdüse ist das Fahrgestell bzw. die Unterseite eines Transportkarrens mit Spitzwasser bzw. Druckluft beaufschlagbar. Es werden dort anhaftende Verschmutzungen beseitigt und die Reinigungswirkung einer erfindungsgemäßen Reinigungsstation weiter verbessert.

Die Erfindung und weitere vorteilhafte Ausführungen derselben werden anhand der kurz angeführten Figuren nachfolgend näher erläutert. Dabei zeigt
- Fig. 1: eine beispielhafte, gemäß der Erfindung ausgeführte Reinigungsstation in einer Draufsicht,
- Fig. 2: die beispielhafte Reinigungsstation von Fig. 1 in einer seitlichen Schnittansicht entlang der Schnittachse A-A von Fig. 1,
- Fig. 3: die beispielhafte Reinigungsstation von Fig. 1 und 2 in einer seitlichen Schnittansicht entlang der Schnittachse C-C von Fig. 1, wobei auf der Reinigungsstation als beispielhafte Transportkarre ein Golftrolley mit einem zu reinigenden Vorderrad platziert ist, und
- Fig. 4: die beispielhafte Reinigungsstation von Fig. 1 und 2 in einer seitlichen Schnittansicht entlang der Schnittachse B-B von Fig. 1, wobei auf der Reinigungsstation als beispielhafte Transportkarre ein Golftrolley mit einem zu reinigenden Hinterrad platziert ist.

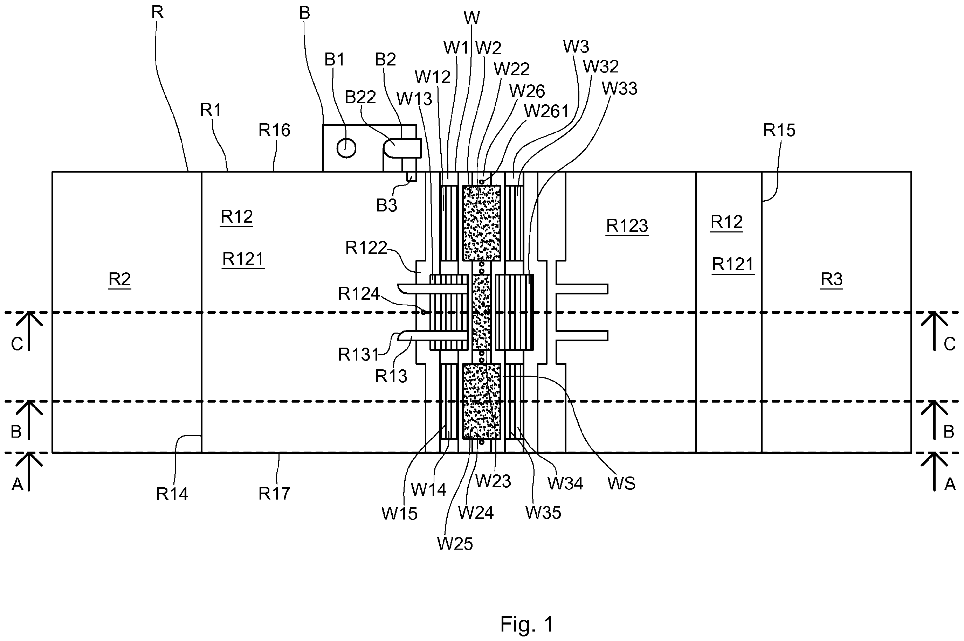

Gemäß der Darstellung von Fig. 1 weist die Reinigungsstation eine Plattform R1 für die Transportkarre auf. Die Plattform R1 ist erhöht ausgeführt und weist an der ersten Stirnflanke R14 eine Auffahrrampe und an der zweiten Stirnflanke R15 eine Abfahrrampe für die Transportkarre auf. Die Oberseite R12 der Plattform sowie die Auf- und Abfahrrampe R2, R3 sind vorteilhaft als ein Gitterrost R121 ausgeführt. Dabei wird eine gute Stabilität der Oberseite bei geringem Gewicht erzielt sowie eine griffige, rutschhemmende Oberfläche geschaffen. Die Plattform R1 weist außerdem eine erste Seitenflanke R16 und eine zweite Seitenflanke R17 auf.

Die Rampen R2, R3 sind vorteilhaft von der Plattform R1 abnehmbar ausgeführt. Eine erfindungsgemäße Reinigungsstation R ist somit sowohl freistehend zur Reinigung von Rädern von Transportkarren oder als Modul einer Reinigungsstraße mit ebenen Übergängen zu bzw. von weiteren Reinigungsstationen verwendbar.

Gemäß der Erfindung weist die Reinigungsstation R eine Anordnung W mit einer Reinigungswalze W1 und einer Antriebswalze W3 zum Abstützen eines Rads sowie eine dazwischen angeordnete Bürstenwalze W2 zur Reinigung zumindest der Radaufstandsfläche des Rads auf. Die Walzen W1, W2, W3 sind unter einer Öffnung R122, die als Reinigungsschacht ausgeführt ist, in der Plattform R1 quer zur Schubrichtung einer Transportkarre parallel angeordnet. Die Walzenwellen sind an deren Enden drehbar an der ersten, zweiten Seitenflanke R16, R17 gelagert. Zur Reinigung eines Rads wird dieses auf Reinigungs- und Antriebswalze W1, W3 platziert und zumindest dessen Radaufstandsfläche durch den Borstenbesatz W25 der Bürstenwalze W2 gereinigt. Reinigungs- und Antriebswalze W1, W3 sind hierzu erfindungsgemäß gleichlaufend und die Bürstenwalze W2 gegenlaufend angetrieben. Vorteilhaft sind Reinigungs- und Antriebswalze W1, W3 mit der gleichen Drehzahl angetrieben.

Besonders vorteilhaft sind alle Walzen W1, W2, W3 mit der gleichen Drehzahl angetrieben. In einer weiteren vorteilhaften Ausführung der Erfindung, welche nicht separat dargestellt ist, ist die Bürstenwalze W2 zur weiteren Verbesserung der Reinigungswirkung vibrierend ausgeführt.

Die Reinigungswalze W1 weist vorteilhafte eine größere Umfangsgeschwindigkeit als die Antriebswalze W3 auf. Dies kann durch den Antrieb von Reinigungs- und Antriebswalze W1, W3 mit unterschiedlicher Drehzahl oder gemäß der vorteilhaften Ausführung dadurch erzielt werden, dass die Reinigungswalze W1 bei gleicher Drehzahl einen geringfügig größeren Durchmesser als die Antriebswalze W3 aufweist. Es rotieren dann ein Rad auf der Anordnung und die Reinigungswalze W1 mit einem Schlupf, sodass die Reinigungswalze W1 dem Rad voreilt. Die Reinigungswalze W1 schabt dann an der Radaufstandsfläche, sodass die Reinigungswirkung der Reinigungswalze W1 verbessert ist.

Die Bürstenwalze W2 weist vorteilhaft Reinigungsdüsen W261 auf, welche diese radial überragen und axial beidseitig auf diese gerichtet sind. Die Reinigungsdüsen W261 sind im vorliegenden Ausführungsbeispiel an den Enden der Bürstenwalze W2 angeordnet und mit deren Düsenöffnungen zur Mitte der Bürstenwalze W2 gerichtet. Es ist so vorteilhaft die Beaufschlagung eines zu reinigenden Rads auf der Anordnung W mit Spritzwasser möglich. Die Reinigungsdüsen W261 weisen weiterhin vorteilhaft separate Düsenöffnungen für Wasser und Luft auf. Es ist so vorteilhaft möglich, ein Rad mit nur leichter Verschmutzung, insbesondere Staub, nur mit Druckluft zu beaufschlagen oder nach der Beaufschlagung eines Rads mit Spritzwasser anhaftende Wassertropfen mit Druckluft zu entfernen. In weiteren vorteilhaften Ausführungen der Erfindung weisen Reinigungs- und Antriebswalze ebenfalls Reinigungsdüsen mit axial auf die Walzen gerichteten Düsenöffnungen auf.

Gemäß der vorteilhaften Ausführung der Figuren weisen die Reinigungs- und Antriebswalze W1, W3 an den Enden jeweils einen ersten Walzenteil W12, W14; W32, W34 mit einem ersten Durchmesser und dazwischen einen zweiten Walzenteil W13; W33 mit einem zweiten, größeren Durchmesser und die Bürstenwalze W2 an den Enden jeweils einen ersten Walzenteil W22, W24 mit einem ersten Durchmesser und dazwischen einen zweiten Walzenteil W23 mit einem zweiten, kleineren Durchmesser auf. Der zweite Walzenteil W23 der Bürstenwalze W2 greift unter Bildung eines gleichmäßigen Walzenspalts WS in die ersten Walzenteile W12, W14; W32, W34 von Reinigungs- und Antriebswalze W1, W3 ein. Die Walzen W1, W2, W3 sind somit stufenförmig ausgeführt und weisen drei axiale Bereiche auf. Der Abstand zwischen den Mantelflächen von Reinigungs- und Antriebswalze W1, W3 ist in den außenliegenden kleinen Walzenteilen W12, W14; W32, W34 größer als in den mittleren großen Walzenteilen W13; W33. Ein Rad mit größerem Durchmesser taucht somit tiefer in den Zwischenraum zwischen Reinigungs- und Antriebswalze W1, W3 ein und ist somit während der Reinigung sicher in der Anordnung W geführt. Der Abstand zwischen den Mantelflächen von Reinigungs- und Antriebswalze W1, W3 ist in den mittleren großen Walzenteilen W13; W33 geringer. Ein Rad mit kleinerem Durchmesser ist in diesem Bereich auf die Anordnung auflegbar ohne die Gefahr eines unerwünschten Durchfallens zwischen Reinigungs- und Antriebswalze W1, W3. Es wird somit die vorteilhafte Wirkung erzielt, dass Räder von Transportkarren mit unterschiedlichem Durchmesser, insbesondere einem mittig angeordneten Rad mit geringerem Durchmesser, reinigbar sind.

Die Bürstenwalze W2 weist im vorliegenden Ausführungsbeispiel vorteilhaft Ringträgerelemente W26 mit Reinigungsdüsen W261 aufweist, welche zwischen den Walzenteilen W22, W23, W24 und an den Enden der Bürstenwalze W2 angeordnet sind, wobei die Reinigungsdüsen W261 die Walzenteile W22, W23, W24 radial überragen und axial beidseitig auf diese gerichtet sind. Die Bürstenwalze W2 weist somit vier Ringträgerelemente W26 auf, wobei die beiden Ringträgerelemente W26 an den Enden der Bürstenwalze W2 jeweils eine Reinigungsdüse W261 mit Düsenöffnungen aufweisen, die zur Mitte der Walze gerichtet sind. Die beiden Ringträgerelemente W26 zwischen den Walzenteilen W22, W23, W24 weisen jeweils zwei Reinigungsdüsen W261 auf, deren Düsenöffnungen beidseitig axial zur Bürstenwelle W2 gerichtet sind. Es sind somit beidseitig zu jedem Walzenteil W22, W23, W24 zwei Reinigungsdüsen W261 angeordnet, deren Reinigungsdüsen W261 beidseitig axial zur Mitte des jeweiligen Walzenteils W22, W23, W24 gerichtet sind. Es wird so die gleichmäßige Beaufschlagung der Walzenteile mit Spitzwasser bzw. Druckluft erzielt.

Die Reinigungswalze W1 weist vorteilhaft auf der Mantelfläche axial verlaufende, eckige Reinigungsleisten W15 auf. Diese stehen über die Mantelfläche hervor und bilden somit eine Art Schruppprofil Es wird so vorteilhaft die Wirkung der groben Vorreinigung eines Rads verbessert. Die Antriebswalze W3 weist ebenso vorteilhaft auf der Mantelfläche axial verlaufende, runde Reinigungsleisten W35 auf. Ein zu reinigendes Rad liegt somit nicht unmittelbar auf der Mantelfläche der Antriebswalze W3 auf. Es wird so vorteilhaft die Gefahr eines Anwalzens von anhaftenden groben Verschmutzungen an das Rad reduziert. Die Reinigungsleisten W15, W35 verlaufen jeweils innerhalb der Walzenteile W12, W13, W14; W32, W33, W34 und sind in der vorliegenden Figur symbolhaft durch Linien auf den Walzenteilen dargestellt.

Die erfindungsgemäße Reinigungsstation R weist außerdem vorteilhaft eine Abdeckung R123 für den Reinigungsschacht R122 auf. Diese ist in bzw. entgegen der Schubrichtung einer Transportkarre verfahrbar. Die Abdeckung R123 ist im vorliegenden Ausführungsbeispiel in der geöffneten Verfahrposition neben dem Reinigungsschacht R122 mit freiliegender Anordnung W dargestellt. Die Abdeckung R123 ist vorteilhaft als Metallplatte ausgeführt, die auf der Plattform P1 angeordnet ist. Nach Abschluss eines Reinigungsvorgangs ist die Abdeckung R123 auf den Reinigungsschacht R122 verfahrbar, sodass dieser verschlossen und die Anordnung W verdeckt ist. Es wird so vorteilhaft das unerwünschte Eintreten von Fremdkörpern in die Anordnung W verhindert und die Gefahr von Beschädigungen an den Walzen W1, W2, W3 reduziert. Außerdem wird das sichere Überqueren des Reinigungsschachts R122 für eine Person ermöglicht und die Gefahr von Verletzungen reduziert. Die Abdeckung R123 ist vorteilhaft über Pneumatikzylinder, einen Linearantrieb oder einen Kettenzug verfahrbar. Die Reinigungsstation R weist vorteilhaft eine Lichtschranke B3 im Bereich der Walzen W1, W2, W3 zum gesteuerten Öffnen bzw. Schließen der Abdeckung R123 auf. Die Lichtschranke B3 erfasst Räder von Transportkarren im Bereich des Reinigungsschachts R122. Die Abdeckung R123 wird so, beispielhaft bei Erfassung von Rädern vor dem Reinigungsschacht R122, automatisch geöffnet und, beispielhaft bei Erfassung von Rädern hinter dem Reinigungsschacht R122, automatisch geschlossen werden. Die Lichtschranke B3 kann in einer weiteren vorteilhaften Ausführung direkt oberhalb der Bürstenwalze W2 positioniert sein. Es wird dann zum gesteuerten Öffnen bzw. Schließen der Abdeckung R123 ein unmittelbar auf der Anordnung W platziertes Rad einer Transportkarre erfasst.

Die erfindungsgemäße Reinigungsstation R weist außerdem vorteilhaft zumindest eine Unterflurdüse R124 in der Öffnung R122 auf, die auf das Fahrgestell einer Transportkarre gerichtet ist. Darüber ist das Fahrgestell bzw. die Unterseite eines Transportkarrens mit Spitzwasser bzw. Druckluft beaufschlagbar. Es können somit vorteilhaft dort anhaftende Verschmutzungen abgeschwemmt werden. In einer weiteren vorteilhaften Ausführung der Erfindung, welche nicht separat dargestellt sind, weist die Reinigungsstation weitere Unterflurdüsen auf, die unterhalb der Plattform angeordnet sind und annähernd parallel zur Plattform auf die Walzenteile W12, W13, W14; W32, W33, W34 gerichtet sind.

Weiterhin weist die erfindungsgemäße Reinigungsstation R vorteilhaft eine Führung R13 für ein mittiges Rad einer Transportkarre G auf. Diese ist in Schubrichtung im Bereich der Mitte der Walzen W1, W2, W3. Im vorliegenden Ausführungsbeispiel weist die Führung R13 zwei parallel in Schubrichtung angeordnete Führungsleisten auf, die auf der Oberseite R12 der Plattform R1 angeordnet sind. Die Führung R13 ist in Schubrichtung der Transportkarre mit dem Rad befahrbar, sodass die Führungsleisten zu beiden Seiten des Rads verlaufen. Ein Rad ist somit daran gehindert ist, aus dem Bereich der mittleren Walenteile W13, W23, W33 axial auszuweichen. Zur erleichterten Befahrbarkeit weist die Führung R13 einfahrseitig einen Einfahrtrichter R131 auf, der vorliegend als Abrundung an den Führungsleisten ausgeführt ist.

Die erfindungsgemäße Reinigungsstation R weist weiterhin eine Bedienkonsole B auf. Diese ist im vorliegenden Ausführungsbeispiel an der ersten Seitenflanke R16 in Schubrichtung für dem Reinigungsschacht R122 angeordnet. Die Bedienkonsole B weist einen handbedienbaren Ein-Aus-Schalter B1 zum Ein- bzw. Ausschalten der Rotation der Walzen W1, W2, W3. Die Bedienkonsole B weist weiterhin eine Handbrause B2 mit einem Wasserschlauch und einer Spritzdüse B22 auf. Die Handbrause ermöglicht die manuelle Vor- bzw. Nachreinigung von Bereichen der Transportkarre, welche nicht mit der Anordnung reinigbar sind, wie z.B. der Achsen oder dem Fahrgestell. Die Handbrause ist in den vorliegenden Figuren nur symbolhaft ausgeführt und kann insbesondere eine längliche, rohrartige Spritzdüse aufweisen. Weiterhin kann die Handbrause einen weiteren Schlauch mit Düse für Druckluft aufweisen.

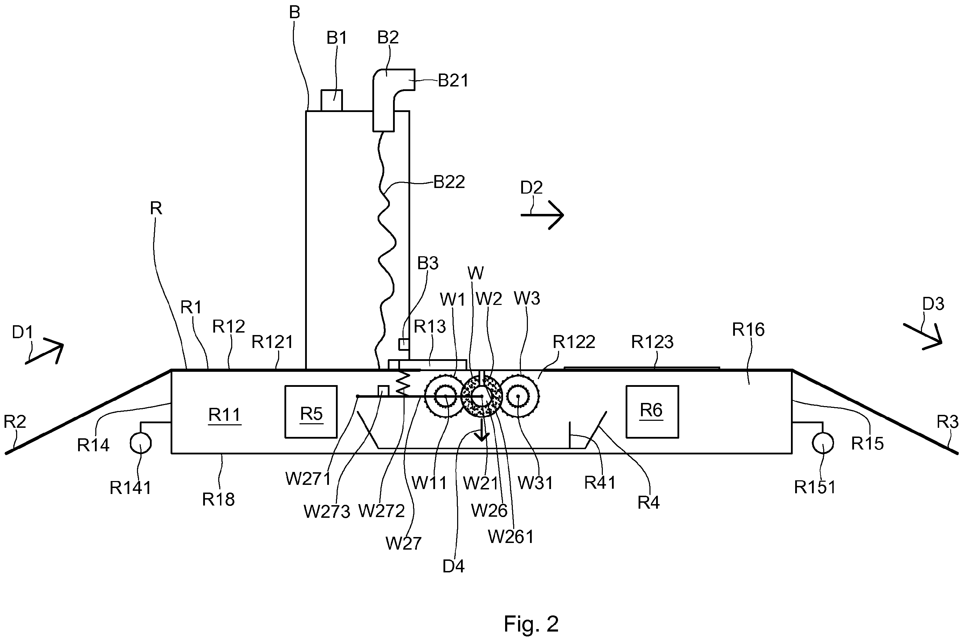

In Fig. 2 ist die beispielhafte, gemäß der Erfindung ausgeführte Reinigungsstation R von Fig. 1 in einer seitlichen Schnittansicht entlang der Schnittachse A-A von Fig. 1 dargestellt. Die Darstellung von Fig. 2 stellt annähernd eine seitliche Draufsicht auf die Reinigungsstation R ohne die zweite Seitenflanke R17 dar.

Die Plattform R1 ist kastenförmig erhöht ausgeführt und weist die Oberseite R12, die erste, zweite Stirnflanke R14, R15, die erste Seitenflanke R16 und einen Boden R18 auf, welche einen Innenraum R11 umspannen. Die Seitenflanke R17 ist nicht dargestellt. Die Auffahrrampe R2 und die Abfahrrampe R3 sowie der Gitterrost R121 der Oberseite R12 sind symbolisch durch eine dicke Linie dargestellt. Die Plattform R1 ist über die Auffahrrampe R2 in Auffahrrichtung D1 durch eine Transportkarre befahrbar, in Schubrichtung D2 überquerbar sowie über die Abfahrrampe R3 in Abfahrrichtung durch eine Transportkarre verlassbar. Der Reinigungsschacht R122 ist symbolhaft durch eine Durchbrechung der dicken Linie des Gitterrosts R121 dargestellt. Die Abdeckung R123 ist in Schubrichtung D2 hinter dem Reinigungsschacht R122 auf der Plattform R1 angeordnet. Die Führung R13 ist in Schubrichtung D3 vor dem Reinigungsschacht R122 auf der Plattform R1 angeordnet und ragt in diesen hinein.

Die Plattform R1 weist vorteilhaft Rollen auf, sodass die Reinigungsstation R vorteilhaft mobil ausgeführt ist. Die Plattform R1 weist vorliegend an der ersten Stirnflanke R14 eine erste Rolle R141 und an der zweiten Stirnflanke R15 eine zweite Rolle R151 auf, welche im Bereich der zweiten Seitenflanke R17 an der Plattform R1 gehalten sind. Das dahinterliegende Rollenpaar im Bereich der ersten Seitenflanke R16 ist perspektivisch verdeckt.

Die Bedienkonsole B ist in der Art einer Säule an der Plattform R1 angeordnet, sodass Ein-Aus-Schalter B1 sowie Handbrause B2 mit Wasserschlauch B22 und Spritzdüse B21 von einer Person bequem greifbar sind. Die Lichtschranke B3 zum gesteuerten Öffnen bzw. Schließen der Abdeckung R123 ist im vorliegenden Ausführungsbeispiel ebenfalls an der Bedienkonsole B angeordnet.

Die Anordnung W ist im Innenraum R11 der Plattform R1 unter dem Reinigungsschacht R122 in der Oberseite R12 angeordnet. Die Anordnung W ist dabei so im Innenraum R11 positioniert, dass die Reinigungsdüsen W261 an der Bürstenwalze W2, die diese radial überragen, annähernd bündig mit dem Reinigungsschacht R122 verlaufen, sodass die gesamte Anordnung W mit Reinigungsdüsen W261 durch die Abdeckung R123 bedeckbar sind. Die Walzen W1, W2, W3 sind quer zur Schubrichtung D2 einer Transportkarre parallel zueinander angeordnet. Die Walzenwellen, W11, W21, W31 der Reinigungs-, Bürsten- und Antriebswalze W1, W2, W3 sind an deren Enden jeweils an erster, zweiter Seitenflanke R16, R17 der Plattform gehalten.

Die Bürstenwalze W2 ist vorteilhaft in vertikaler Richtung federnd ausweichfähig gelagert. Bei Auflage eines Rads mit einem größeren Durchmesser, insbesondere auf die äußeren Walzenteile W12, W14; W22, W24; W32, W34 ist die Bürstenwalze W2 in vertikaler Richtung ausweichfähig. Es wird so vorteilhaft die Anlegbarkeit der Bürstenwalze W2 an ein zu reinigendes Rad verbessert. Weiterhin wird vorteilhaft die Gefahr eines unerwünscht flachen Anliegens der Borsten des Borstenbesatzes W25 an der Radaufstandsfläche reduziert. Die Ausweichfähigkeit der Bürstenwalze W2 ist in der Figur symbolhaft durch die Kipprichtung D4 dargestellt. Gemäß der in den Figuren dargestellten vorteilhaften Ausführung ist die die Bürstenwalze W2 an einem schwenkbaren Lenkerarm W27 gelagert und über eine Zugfeder W272 ausweichfähig. Der Lenkerarm W27 ist über dessen Schwenklager W271 an der zweiten Seitenflanke R17 drehbar gehalten. Der dahinterliegende Lenkerarm W27 an der ersten Seitenflanke R16 ist perspektivisch verdeckt. Die Zugfeder W272 ist an der Oberseite R12 gehalten und bewirkt eine Rückstellung von Lenkerarm W27 mit Bürstenrolle W2 nach Entfernen eines Rads von der Anordnung W. In einer weiteren vorteilhaften Ausführung der Erfindung, welche in den Figuren nicht separat dargestellt ist, ist die Bürstenwalze W2 über Führungskulissen in vertikaler Richtung federnd ausweichfähig gelagert.

Die Reinigungsstation R weist vorteilhaft einen Sensor W273 zur Erfassung der Ausweichung der Bürstenwalze W2, welcher die Ansteuerung der Reinigungsdüsen W261 veranlasst. Der Sensor W273 ist im vorliegenden Ausführungsbeispiel im Innenraum R11 im Bereich des Lenkerarms W27 angeordnet und erfasst über diesen die Ausweichung der Bürstenwalze W2. Bei Erfassung einer größeren Auslenkung, insbesondere durch ein Rad mit größerem Durchmesser auf einem äußeren Walzenteil W12, W14; W22, W24; W32, W34 erfolgt die Aktivierung der Reinigungsdüsen W261 auf den Ringträgerelementen W26 an den Enden der Bürstenwalze W2 sowie die Aktivierung der Reinigungsdüsen W261, die axial auf die großen Walzenteile W22, W24 der Bürstenwalze W2 gerichtet sind, auf den Ringträgerelementen W26 zwischen den Walzenteilen W22, W23, W24. Dabei wird vorteilhaft eine bedarfsgenaue Aktivierung der Reinigungsdüsen und somit eine Reduktion des Wasser- bzw. Druckluftverbrauchs einer erfindungsgemäßen Reinigungsstation erzielt. Eine erfindungsgemäße Reinigungsstation R gemäß dieser vorteilhaften Ausführung ist vorteilhaft an einem üblichen Fernwassernetz betreibbar.

Im Innenraum R11 ist unterhalb der Anordnung W eine Sammelwanne R4 für verbrauchtes Wasser sowie von den Rädern entferne Verschmutzungen angeordnet. Die Sammelwanne R4 verläuft über die gesamte Breite der Plattform R1 und ist seitlich an einer der Seitenflanken R16, R17 aus dem Innenraum R11 herauszieh- und entleerbar. Die Sammelwanne R4 weist eine Fallstufe R41 auf. Diese dient der Zurückhaltung der Verschmutzungen, sodass annähernd schwebstofffreies verbrauchtes Wasser jenseits der Fallstufe R41 aus der Sammelwanne R4 abgeführt und wiederverwendet oder entsorgt werden kann. Bei einer weiteren vorteilhaften Ausführung der Erfindung, die nicht separat dargestellt ist, weist die Sammelwanne zumindest ein Sieb zur Zurückhaltung der Verschmutzungen auf. Die Sammelwanne kann vorteilhaft eine Größe aufweisen, dass insbesondere Verschmutzungen in Schubrichtung vor der Anordnung, die durch den Gitterrost der Plattform fallen, in der Sammelwanne aufgefangen werden.

Die Reinigungsstation R weist im Innenraum R1 außerdem eine Zu- und Abführeinheit R5 für frisches bzw. verbrauchtes Wasser auf, die in der vorliegenden Figur nur symbolhaft durch einen Kasten dargestellt ist. Die Reinigungsstation R weist außerdem eine Steuer- und Antriebseinheit für die Walzen, W1, W2, W3, den Sensor W273, die Lichtschranke B3 sowie für weitere nicht separat dargestellte Sensoren und Aktoren auf.

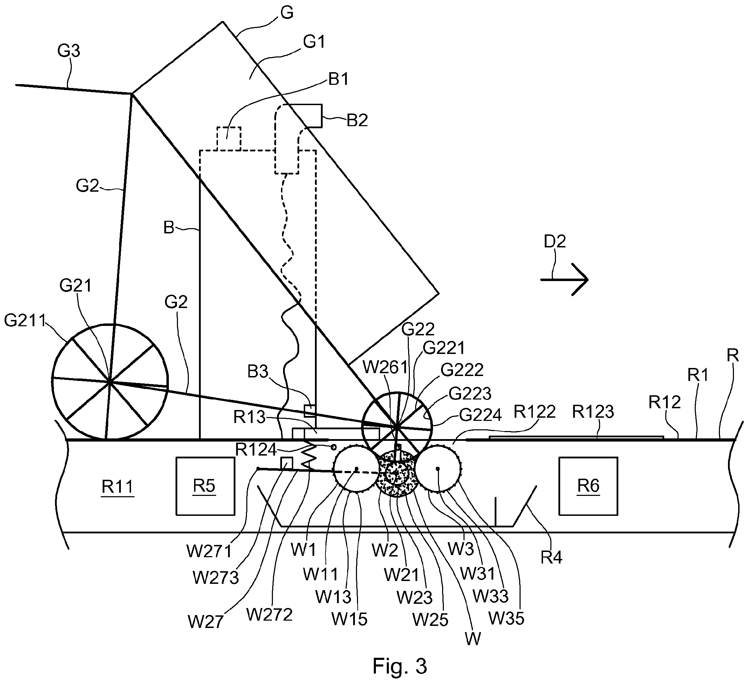

In Fig. 3 ist ein Ausschnitt der erfindungsgemäßen Reinigungsstation R von Fig. 1 und Fig. 2 in einer seitlichen Schnittansicht gemäß der Schnittachse C-C von Fig. 1 dargestellt. Die vorliegende Figur zeigt die erfindungsgemäße Reinigungsstation R während der Reinigung eines Vorderrads mit geringerem Durchmesser eines Golftrolleys G als Transportkarre.

Vor der Reinigung des Vorderrads G221 ist der Golftrolley G in Auffahrrichtung über die Auffahrrampe auf die Oberseite R12 der Plattform R1 geschoben. Die Abdeckung R123 ist nach Erfassung des Vorderrads G221 durch die Lichtschranke B3 geöffnet, sodass die Anordnung W im Reinigungsschacht R122 zugänglich ist.

Der Golftrolley G weist ein Fahrgestell G2 auf, an dem eine Schlägertasche G1 gehalten ist. Der Golftrolley G ist über einen Handgriff G3 von einer Person ergreifbar. Schlägertasche G1, Fahrgestell G2 und Handgriff sind in den vorliegenden Figuren nur symbolhaft dargestellt. Der Golftrolley G weist im vorliegenden Ausführungsbeispiel an dessen Hinterachse G21 zwei Räder auf, wobei das Hinterrad G211 sichtbar und das andere Hinterrad perspektivisch verdeckt ist. Die Vorderachse G22 weist ein mittig angeordnetes Vorderrad G221 mit geringerem Durchmesser auf. Die Räder weisen im vorliegenden Ausführungsbeispiel jeweils eine mittige Nabe, Speichen und einen Laufring auf.

Das Vorderrad G22 liegt auf dem großen Walzenteil W13 der Reinigungswalze W1, dem kleinen Walzenteil W23 der Bürstenwalze W2 und dem großen Walzenteil W33 der Antriebswalze auf und ist durch die Führung R13 axial geführt. Die Bürstenwalze W2 ist durch das Vorderrad G221 in vertikaler Richtung ausgelenkt. Dies ist in der Figur daran erkennbar, dass die Walzenwelle W21 der Bürstenwalze W2 tiefer liegt als die Walzenwellen W11, W31 der Reinigungs- und Antriebswalze W1, W3. Der Lenkerarm W27 ist um dessen Schwenklager W271 gekippt und durch die Zugfeder W272 gehalten. Der Sensor W273 erfasst die durch das Vorderrad G221 auf der Bürstenwalze W2 hervorgerufene Auslenkung zur Ansteuerung der Reinigungsdüsen W261.

Zum Start des Reinigungsvorgangs des Vorderrads G221 ist der Ein-Aus-Schalter B1 an der Bedienkonsole B durch eine Person zu betätigen. Die Walzen W1, W2, W3 werden durch die Steuer- und Antriebseinheit R6 in Rotation versetzt. Dabei rotieren Reinigungs- und Antriebswalze W1, W3 gleichläufig synchron mit gleicher Drehzahl und die Bürstenwalze W2 gegenläufig vorteilhaft mit der gleichen Drehzahl. Das Vorderrad G221 ist somit zumindest durch die Antriebswalze W3 in eine Mitrotation versetzt. Die Reinigungswalze W1 weist einen geringfügig größeren Durchmesser und somit vorteilhaft eine größere Umfangsgeschwindigkeit als die Antriebswalze W3 auf. Es entsteht somit ein Schlupf zwischen Reinigungswalze W1 und der Radaufstandsfläche G224 des Vorderrads G221. Dabei erfolgt, unterstützt durch die runden Reinigungsleisten W35 der Antriebswalze und die eckigen Reinigungsleisten W15 der Reinigungswalze W1, eine grobe Vorreinigung der Radaufstandsfläche G224. Der Borstenbesatz W25 der gegenläufig rotierenden Bürstenwalze W2 ermöglicht eine Feinreinigung der Radaufstandsfläche G224 sowie der seitlichen Kanten des Vorderrads G221.

Das Vorderrad G221 wird über die Reinigungsdüsen W261 beidseitig mit Spritzwasser beaufschlagt. Anhand der über den Sensor W273 erfassten geringen Auslenkung der Bürstenwalze W2 sind nur die Reinigungsdüsen W261 aktiviert, die auf den kleinen Walzenteil W23 der Bürstenwalze W2 gerichtet sind. Die Düsenöffnungen der Reinigungsdüsen W261 sind dabei auf die Bürstenwalze W2 und die Speichen G222 und die Radinnenflanke G223 gerichtet. Es ist so möglich, lose anhaftende Verschmutzungen von den Speichen und der Radinnenflanke eines Rads abzuschwemmen. Während des Reinigungsvorgangs der Räder kann durch eine Person mittels der Handbrause B2 eine Vor- bzw. Nachreinigung einzelner Komponenten des Golftrolleys G erfolgen.

Die Unterflurdüse R124 ist auf das Fahrgestell G2 im Bereich der Radgabel der Vorderachse G22 des Golftrolleys G gerichtet, sodass auch dort locker anhaftende Verschmutzungen abgeschwemmt werden.

Nach der Reinigung des Rads mittels Spitzwasser erfolgt vorteilhaft eine Aktivierung der Düsenöffnungen für Druckluft. Es wird so anhaftendes Wasser von Vorderrad G221 und Fahrgestellt G2 entfernt.

Von der Anordnung W sowie dem Vorderrad G221 ablaufendes Schmutzwasser sowie abgetragene Verschmutzungen werden in der Sammelwanne R4 unter der Anordnung W aufgefangen. Mittels der Fallstufe R41 erfolgt eine Zurückhaltung der Verschmutzungen sodass annähernd schwebstofffreies verbrauchtes Wasser abgeführt werden kann. Die Versorgung der Reinigungsdüsen W261 mit frischem Wasser sowie die Abführung von verbrauchtem Wasser erfolgt durch die Zu- und Abführeinheit R5, die ebenfalls im Innenraum R11 der Plattform R1 angeordnet ist.

Die Dauer des Reinigungsvorgangs ist so bemessen, dass das zu reinigende Rad mehrere volle Umdrehungen vollführt. Der Reinigungsvorgang wird dann durch erneute Betätigung des Ein-Aus-Schalters B1 durch eine Person beendet. In einer weiteren vorteilhaften Ausführung der Erfindung wird der Reinigungsvorgang nach einer voreinstellbaren Zeit automatisch durch die Steuer- und Antriebseinheit R6 automatisch beendet.

Nach Abschluss des Reinigungsvorgangs des Vorderrads G221 wird der Golftrolley G durch eine Person in Schubrichtung D2 bewegt und die Hinterachse G21 mit dem Hinterrad G221 auf der Anordnung W platziert.

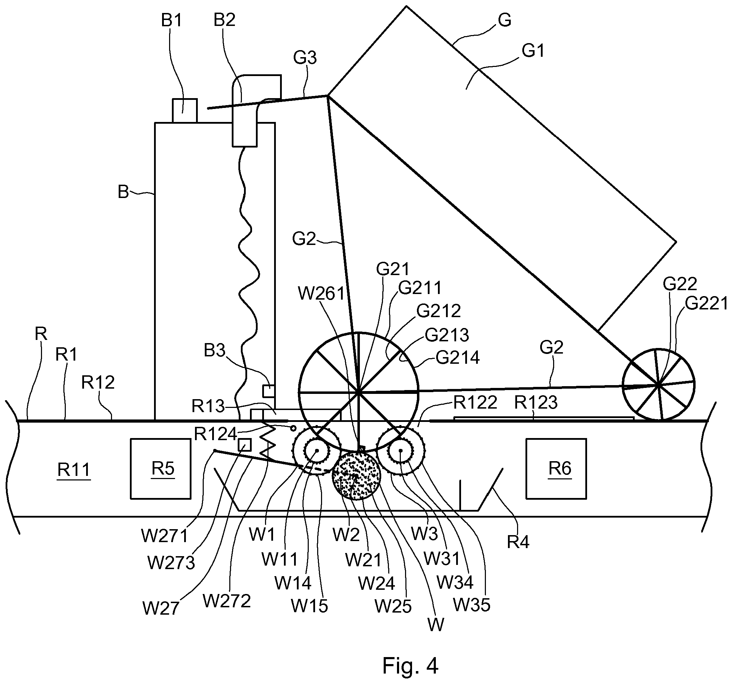

Dieser Zustand während der Reinigung des Vorderrads G221 mit größerem Durchmesser des Golftrolleys G ist in Fig. 4 dargestellt. Die Figur zeigt eine seitliche Schnittansicht durch Reinigungsstation R und Golftrolley G entlang der Schnittachse B-B von Fig. 1.

Die Reinigung des Hinterrads G211 erfolgt analog zu dem beschriebenen Reinigungsvorgang des Vorderrads G221. Die Hinterachse G21 ist auf der Anordnung W platziert, wobei das Hinterrad G211 mit dessen Radaufstandsfläche G214 auf dem zweiten kleinen Walzenteil W14 der Reinigungswalze W1, dem zweiten großen Walzenteil W24 der Bürstenwalze W2 und dem zweiten kleinen Walzenteil W34 der Antriebswalze W3 aufliegt. Das Hinterrad G211 weist einen größeren Durchmesser als das Vorderrad auf, sodass die Bürstenwalze W2 in vertikaler Richtung weiter ausgelenkt ist. Dies ist daran erkennbar, dass die Walzenwelle W21 der Bürstenwalze W2 noch tiefer liegt als die Walzenwellen W11, W31 der Reinigungs- und Antriebswalze W1, W3. Der Lenkerarm W27 ist somit weiter um das Schwenklager W271 geschwenkt und die Zugfeder W272 weiter gedehnt. Die weitere Auslenkung von Bürstenwalze W2 und Lenkerarm W27 wird durch den Sensor W273 erfasst.

Zum Start des Reinigungsvorgangs des Hinterrads G221 ist der Ein-Aus-Schalter B1 an der Bedienkonsole B durch eine Person nochmals zu betätigen. Es erfolgt sodann die Rotation des Hinterrads G221 mittels Antriebswalze W3, die grobe Vorreinigung mittels Reinigungs- und Antriebswalze W1, W3, die Feinreinigung von Radaufstandsfläche G214 und seitlichen Kanten durch die Bürstenwalze W2 sowie die Beaufschlagung von Bürstenwalze W2, Speichen G212 und Radinnenflanke G213 mit Spritzwasser. Die Welle der Hinterachse G21 ist über die Unterflurdüse R124 Spritzwasser beaufschlagbar. Dabei erfolgt aufgrund der durch den Sensor W273 erfassten weiteren Auslenkung der Bürstenwalze W2 nur eine Aktivierung der Reinigungsdüsen W261, die axial beidseitig auf die außenliegenden großen Walzenteile W22, W24 der Bürstenwalze W2 gerichtet sind. Nach Reinigung des Hinterrads G221 mittels Spitzwasser erfolgt vorteilhaft eine Aktivierung der Düsenöffnungen für Druckluft zur Entfernung von anhaftendem Wasser.

Während des Reinigungsvorgangs der Räder kann wieder durch eine Person mittels der Handbrause B2 eine Vor- bzw. Nachreinigung einzelner Komponenten des Golftrolleys G erfolgen.

Der Reinigungsvorgang wird durch erneute Betätigung des Ein-Aus-Schalters B1 durch eine Person beendet. Der Golftrolley G wird dann durch eine Person in Schubrichtung bewegt und so die Hinterachse G21 aus dem Bereich des Reinigungsschachts R122. Die Abdeckung R123 wird nach Erfassung des Hinterrads G211 hinter dem Reinigungsschacht R122 durch die Lichtschranke B3 geschlossen, sodass eine Person mit dem Golftrolley G die Plattform R1 in Abfahrrichtung verlassen kann.

### Bezugszeichenliste

- R: Reinigungsstation
- R1: Plattform
- R11: Innenraum
- R12: Oberseite
- R121: Gitterrost
- R122: Öffnung, insbesondere Reinigungsschacht
- R123: Schachtabdeckung
- R124: Unterflurdüse
- R13: Führung
- R131: Einfahrtrichter
- R14, R15: Erste, zweite Stirnflanke
- R141, R151: Erste, zweite Rolle
- R16, R17: Erste, zweite Seitenflanke
- R18: Boden
- R2, R3: Auf-, Abfahrrampe
- R4: Sammelwanne
- R41: Fallstufe
- R5: Zu- und Abführeinheit für Wasser
- R6: Steuer- und Antriebseinheit
- B: Bedienkonsole
- B1: Ein-Aus-Schalter
- B2: Handbrause
- B21: Wasserschlauch
- B22: Spritzdüse
- B3: Lichtschranke
- W: Walzenanordnung
- W1: Reinigungswalze
- W11: Walzenwelle
- W12: erster kleiner Walzenteil
- W13: großer Walzenteil
- W14: zweiter kleiner Walzenteil
- W15: Reinigungsleisten, insbesondere eckig
- W2: Bürstenwalze
- W21: Walzenwelle
- W22: erster großer Walzenteil
- W23: kleiner Walzenteil
- W24: zweiter großer Walzenteil
- W25: Borstenbesatz
- W26: Ringträgerelement
- W261: Reinigungsdüse
- W27: Lenkerarm
- W271: Schwenklager
- W272: Zugfeder
- W273: Sensor
- W3: Antriebswalze
- W31: Walzenwelle
- W32: erster kleiner Walzenteil
- W33: großer Walzenteil
- W34: zweiter kleiner Walzenteil
- W35: Reinigungsleisten, insbesondere rund
- WS: Walzenspalt
- G: Transportkarre, insbesondere Golftrolley
- G1: Schlägertasche
- G2: Fahrgestell
- G21: Hinterachse
- G211: Hinterrad
- G212: Speichen
- G213: Radinnenflanke
- G214: Radaufstandsfläche
- G22: Vorderachse
- G221: Vorderrad
- G222: Speichen
- G223: Radinnenflanke
- G224: Radaufstandsfläche
- G3: Handgriff
- D1: Auffahrrichtung
- D2: Schubrichtung
- D3: Abfahrrichtung
- D4: Kipprichtung
- A-A: Schnittachse
- B-B: Schnittachse
- C-C: Schnittachse

## Patentansprüche

1. Reinigungsstation (R) zumindest für ein Rad (G211, G221) einer Transportkarre (G), insbesondere eines Golftrolleys, mit
- einer Plattform (R1) für die Transportkarre (G),
- einer Anordnung (W) mit einer Reinigungswalze (W1) und einer Antriebswalze (W3) zum Abstützen eines Rads (G211, G221) der Transportkarre (G) sowie einer dazwischen angeordneten Bürstenwalze (W2) zur Reinigung zumindest der Radaufstandsfläche (G214, G224), wobei die Walzen (W1, W2, W3) unter einer Öffnung (R122) in der Plattform (R1) quer zur Schubrichtung (D2) der Transportkarre (G) parallel angeordnet sind, und
- einem Antrieb (R6), womit die Reinigungs- und Antriebswalze (W1, W3) gleichlaufend und die Bürstenwalze (W2) hierzu gegenlaufend angetrieben sind.

2. Reinigungsstation nach Anspruch 1, wobei
die Reinigungswalze (W1) eine größere Umfangsgeschwindigkeit als zumindest die Antriebswalze (W3) aufweist.

3. Reinigungsstation nach Anspruch 1 oder 2, wobei
die Reinigungswalze (W1) auf der Mantelfläche axial verlaufende, insbesondere eckige, Reinigungsleisten (W15) aufweist.

4. Reinigungsstation nach Anspruch 1, 2 oder 3, wobei
im Bereich der Bürstenwalze (W2) Reinigungsdüsen (W261) angeordnet sind, welche die Bürstenwalze (W2) radial überragen und axial beidseitig auf diese gerichtet sind.

5. Reinigungsstation nach Anspruch 4, wobei
die Reinigungsdüsen (W261) Düsenöffnungen für Wasser und/oder Luft aufweisen.

6. Reinigungsstation nach einem der vorangegangenen Ansprüche, wobei
- die Reinigungs- und Antriebswalze (W1, W3) an den Enden jeweils einen ersten Bereich (W12, W14; W32, W34) mit einem ersten Durchmesser und dazwischen einen zweiten Bereich (W13; W33) mit einem zweiten, größeren Durchmesser aufweisen,
- die Bürstenwalze (W2) an den Enden jeweils einen ersten Bereich (W22, W24) mit einem ersten Durchmesser und dazwischen einen zweiten Bereich (W23) mit einem zweiten, kleineren Durchmesser aufweist, und
- der zweite Bereich (W23) der Bürstenwalze (W2) unter Bildung eines gleichmäßigen Walzenspalts (WS) in die ersten Bereiche (W12, W14; W32, W34) von Reinigungs- und Antriebswalze (W1, W3) eingreift.

7. Reinigungsstation nach Anspruch 6, wobei
die Bürstenwalze (W2) Ringträgerelemente (W26) mit Reinigungsdüsen (W261) aufweist, welche zwischen den Bereichen (W22, W23, W24) und/oder an den Enden der Bürstenwalze (W2) angeordnet sind, wobei die Reinigungsdüsen (W261) die Bereiche (W22, W23, W24) radial überragen und axial beidseitig auf diese gerichtet sind.

8. Reinigungsstation nach einem der vorangegangenen Ansprüche, wobei
die Antriebswalze (W3) auf der Mantelfläche axial verlaufende, insbesondere runde, Reinigungsleisten (W35) aufweist.

9. Reinigungsstation nach einem der vorangegangenen Ansprüche, wobei
die Bürstenwalze (W2) in vertikaler Richtung federnd ausweichfähig gelagert ist.

10. Reinigungsstation nach Anspruch 9, wobei
die Bürstenwalze (W2) an einem schwenkbaren Lenkerarm (W27) gelagert und über eine Zugfeder (W272) ausweichfähig ist.

11. Reinigungsstation nach Anspruch 4 und 9, mit
einem Sensor (W273) zur Erfassung der Ausweichung der Bürstenwalze (W2), welcher die Ansteuerung der Reinigungsdüsen (W261) veranlasst.

12. Reinigungsstation nach einem der vorangegangenen Ansprüche, mit
einer Führung (R13) für ein mittiges Rad (G221) einer Transportkarre (G) in Schubrichtung (D2) im Bereich der Mitte der Walzen (W1, W2, W3).

13. Reinigungsstation nach einem der vorangegangenen Ansprüche, mit
einer Abdeckung (R123) für die Öffnung (R122), die in bzw. entgegen der Schubrichtung (D2) verfahrbar ist.

14. Reinigungsstation nach Anspruch 13, mit
zumindest einer Lichtschranke (B3) im Bereich der Walzen (W1, W2, W3) zum gesteuerten Öffnen bzw. Schließen der Abdeckung (R123).

15. Reinigungsstation nach einem der vorangegangenen Ansprüche, mit
zumindest einer Unterflurdüse (R124) in der Öffnung (R122), welche auf das Fahrgestell (G2) gerichtet ist.

## Claims

1. Cleaning station (R) at least for a wheel (G211, G221) of a trolley (G), in particular of a golf trolley,
- having a platform (R1) for the trolley (G),
- having an arrangement (W) with a cleaning roller (W1) and a drive roller (W3) for supporting a wheel (G211, G221) of the trolley (G) and also with a brush roller (W2), which is arranged between the cleaning roller and drive roller and is intended for cleaning at least the wheel-contact surface (G214, G224), wherein the rollers (W1, W2, W3) are arranged parallel to one another, in a direction transverse to the pushing direction (D2) of the trolley (G), beneath an opening (R122) in the platform (R1), and
- having a drive (R6), by means of which the cleaning and drive rollers (W1, W3) are driven in the same direction and the brush roller (W2) is driven in the direction counter thereto.

2. Cleaning station according to Claim 1, wherein
the cleaning roller (W1) has a greater circumferential speed than at least the drive roller (W3).

3. Cleaning station according to Claim 1 or 2, wherein
the cleaning roller (W1) has axially running, in particular angular, cleaning strips (W15) on the lateral surface.

4. Cleaning station according to Claim 1, 2 or 3, wherein
cleaning nozzles (W261) are arranged in the region of the brush roller (W2), said cleaning nozzles projecting radially beyond the brush roller (W2) and being directed axially onto the same on either side.

5. Cleaning station according to Claim 4, wherein
the cleaning nozzles (W261) have nozzle openings for water and/or air.

6. Cleaning station according to one of the preceding claims, wherein
- at each of the ends, the cleaning and drive rollers (W1, W3) have a first region (W12, W14; W32, W34) with a first diameter and, therebetween, a second region (W13; W33) with a second, larger diameter,
- at each of the ends, the brush roller (W2) has a first region (W22, W24) with a first diameter and, therebetween, a second region (W23) with a second, smaller diameter, and
- the second region (W23) of the brush roller (W2) engages in the first regions (W12, W14; W32, W34) of the cleaning and drive rollers (W1, W3), with a uniform roller nip (WS) being formed in the process.

7. Cleaning station according to Claim 6, wherein
the brush roller (W2) has annular carrier elements (W26) with cleaning nozzles (W261), which are arranged between the regions (W22, W23, W24) and/or at the ends of the brush roller (W2), wherein the cleaning nozzles (W261) project radially beyond the regions (W22, W23, W24) and are directed axially onto the same on either side.

8. Cleaning station according to one of the preceding claims, wherein
the drive roller (W3) has axially running, in particular round, cleaning strips (W35) on the lateral surface.

9. Cleaning station according to one of the preceding claims, wherein
the brush roller (W2) is mounted such that it is capable of yielding resiliently in the vertical direction.

10. Cleaning station according to Claim 9, wherein
the brush roller (W2) is mounted on a pivotable link arm (W27) and is capable of yielding via a tension spring (W272).

11. Cleaning station according to Claims 4 and 9,
having a sensor (W273) for sensing the extent of yielding of the brush roller (W2), said sensor prompting the activation of the cleaning nozzles (W261).

12. Cleaning station according to one of the preceding claims
having a guide (R13) for a central wheel (G221) of a trolley (G) in the pushing direction (D2) in the region of the centre of the rollers (W1, W2, W3).

13. Cleaning station according to one of the preceding claims
having a cover (R123) for the opening (R122), it being possible for the cover to be displaced in and counter to the pushing direction (D2).

14. Cleaning station according to Claim 13,
having at least one light barrier (B3) in the region of the rollers (W1, W2, W3) for a controlled opening and closing of the cover (R123).

15. Cleaning station according to one of the preceding claims,
having at least one underfloor nozzle (R124) in the opening (R122), said nozzle being directed onto the chassis (G2).

## Revendications

1. Station de nettoyage (R) en particulier pour une roue (G211, G221) d'un chariot de transport (G), en particulier d'un chariot de golf, avec
- une plate-forme (R1) pour le chariot de transport (G),
- un agencement (W) avec un rouleau de nettoyage (W1) et un rouleau d'entraînement (W3) pour supporter une roue (G211, G221) du chariot de transport (G) ainsi qu'avec un rouleau de brosses (W2) disposé entre ceux-ci pour le nettoyage d'au moins une face de contact de roue (G214, G224), dans lequel les rouleaux (W1, W2, W3) sont disposés parallèlement sous une ouverture (R122) dans la plate-forme (R1) transversalement à la direction de poussée (D2) du chariot de transport (G), et
- un entraînement (R6), avec lequel le rouleau de nettoyage et le rouleau d'entraînement (W1, W3) sont entraînés dans le même sens et le rouleau de brosses (W2) est entraîné en sens contraire.

2. Station de nettoyage selon la revendication 1, dans laquelle le rouleau de nettoyage (W1) présente une vitesse périphérique plus élevée qu'au moins le rouleau d'entraînement (W3).

3. Station de nettoyage selon la revendication 1 ou 2, dans laquelle le rouleau de nettoyage (W1) présente des nervures de nettoyage (W15), en particulier polygonales, s'étendant axialement sur la surface latérale.

4. Station de nettoyage selon la revendication 1, 2 ou 3, dans laquelle des buses de nettoyage (W261) sont disposées dans la région du rouleau de brosses (W2), qui sortent radialement du rouleau de brosses (W2) et qui sont orientées axialement de part et d'autre vers celui-ci.

5. Station de nettoyage selon la revendication 4, dans laquelle les buses de nettoyage (W261) présentent des ouvertures de buse pour de l'eau et/ou de l'air.

6. Station de nettoyage selon l'une quelconque des revendications précédentes, dans laquelle
- le rouleau de nettoyage et le rouleau d'entraînement (W1, W3) présentent aux extrémités chaque fois une première région (W12, W14; W32, W34) avec un premier diamètre et entre celles-ci une deuxième région (W13; W33) avec un deuxième diamètre, plus grand,
- le rouleau de brosses (W2) présente aux extrémités chaque fois une première région (W22, W24) avec un premier diamètre et entre celles-ci une deuxième région (W23) avec un diamètre, plus petit, et
- la deuxième région (W23) du rouleau de brosses (W2) s'engage dans les premières régions (W12, W14; W32, W34) du rouleau de nettoyage et du rouleau d'entraînement (W1, W3) en formant une fente de rouleaux (WS) uniforme.

7. Station de nettoyage selon la revendication 6, dans laquelle le rouleau de brosses (W2) présente des éléments de support annulaires (W26) avec des buses de nettoyage (W261), qui sont disposées entre les régions (W22, W23, W24) et/ou aux extrémités du rouleau de brosses (W2), dans laquelle les buses de nettoyage (W261) dépassent radialement les régions (W22, W23, W24) et sont orientées axialement de part et d'autre vers celles-ci.

8. Station de nettoyage selon l'une quelconque des revendications précédentes, dans laquelle le rouleau d'entraînement (W3) présente des nervures de nettoyage (W35), en particulier rondes, s'étendant axialement sur la surface latérale.

9. Station de nettoyage selon l'une quelconque des revendications précédentes, dans laquelle le rouleau de brosses (W2) est monté de façon élastiquement suspendue en direction verticale.

10. Station de nettoyage selon la revendication 9, dans laquelle le rouleau de brosses (W2) est monté sur un bras oscillant (W27) et est suspendu au moyen d'un ressort de traction (W272).

11. Station de nettoyage selon les revendications 4 et 9, avec un capteur (W273) pour la détection de l'écart du rouleau de brosses (W2), qui provoque la commande des buses de nettoyage (W261).

12. Station de nettoyage selon l'une quelconque des revendications précédentes, avec un guidage (R13) pour une roue centrale (G221) d'un chariot de transport (G) dans la direction de poussée (D2) dans la région du milieu des rouleaux (W1, W2, W3).

13. Station de nettoyage selon l'une quelconque des revendications précédentes, avec un couvercle (R123) pour l'ouverture (R122), qui est déplaçable dans la direction de poussée (D2) ou inversement.

14. Station de nettoyage selon la revendication 13, avec au moins une barrière lumineuse (B3) dans la région des rouleaux (W1, W2, W3) pour l'ouverture ou la fermeture commandée du couvercle (R123).

15. Station de nettoyage selon l'une quelconque des revendications précédentes, avec au moins une buse sous plancher (R124) dans l'ouverture (R122), qui est orientée vers le train roulant (G2).
